# EUROPEAN PATENT SPECIFICATION

(11) **EP 3 985 913 B1**
(45) Date of publication and mention of the grant of the patent: **20.12.2023**
(21) Application number: 20822681.1
(22) Date of filing: 11.06.2020
(51) Int. Cl.: H04L 9/40, H04L 9/32, G06F 21/44, H04L 67/025, H04L 67/125

(54) **APPARATUS MANAGEMENT SYSTEM AND AUTHENTICATION METHOD**
GERÄTEVERWALTUNGSSYSTEM UND AUTHENTIFIZIERUNGSVERFAHREN
SYSTÈME DE GESTION D'APPAREIL ET PROCÉDÉ D'AUTHENTIFICATION

(30) Priority: 14.06.2019 JP 2019111009
(43) Date of publication of application: 20.04.2022
(73) Proprietor: DAIKIN INDUSTRIES, LTD., Osaka-Shi, Osaka 530-0001 (JP)
(72) Inventor: KATAOKA Taro, Osaka-shi, Osaka 530-0001 (JP)
(74) Representative: Hoffmann Eitle
(86) International application number: PCT/JP2020/023055
(87) International publication number: WO 2020/250983

(56) References cited:
- EP-A1- 3 313 050
- JP-A- 2006 246 272
- JP-A- 2007 511 167
- US-A1- 2016 234 177

## Description

### TECHNICAL FIELD

The present disclosure relates to an apparatus management system that manages an apparatus and an authentication method.

### BACKGROUND ART

Patent Document 1 discloses an apparatus management system. In the publication, a mobile terminal and a management server communicate with each other through the Internet.

Patent Document 2 discloses the connection between a server and apparatuses. In Patent Document 2, a high-speed supplementary service center receives a delivery request for high-speed content as upload low-speed data from a terminal through a low-speed communication network. Then, the high-speed supplementary service center transmits the received upload low-speed data to a high-speed content delivery server through a virtual private network and a dedicated line. The high-speed supplementary service center refers to a route allocation condition related to the header attribute or data volume of download data and transmits the download data to the terminal, from which the request was received through the virtual private network and the dedicated line, through a high-speed communication channel or a low-speed communication line in accordance with the route allocation condition.

Patent Document 3 relates to uniform communication protocols for communication between controllers and accessories.

Patent Document 4 relates to secure communication with a mobile device.

### PRIOR ART DOCUMENTS

### Patent Documents

Patent Document 1: Japanese Laid-Open Patent Publication No. 2016-133294
Patent Document 2: Japanese Laid-Open Patent Publication No. 2002-27009
Patent Document 3: EP 3 313 050 A1
Patent Document 4: US 2016/234177 A1

### SUMMARY OF THE INVENTION

### Problems that the Invention is to Solve

It is preferred that communication between a server and an apparatus be performed in a secure manner. However, when multiple apparatuses are connected to the server, the acquirement of a device certificate for each apparatus is burdensome and time-consuming. This raises the cost of an authentication process.

It is an objective of the present disclosure to provide an apparatus management system and an authentication method that reduce the cost of an authentication process. Means for Solving the Problems

An apparatus management system includes a management device that remotely manages apparatus information related to an apparatus, and an information communication device connected to the apparatus to obtain the apparatus information and transmit the apparatus information to the management device by communicating with the management device through a communication network. The management device is configured to be connected to the information communication device through a closed network that connects the management device and the information communication device in a secure state, and the closed network is isolated in terms of access from an open network in the communication network. When the management device is connected to the information communication device through the closed network, the management device is configured to perform authentication determination on the information communication device and transmit a device certificate to the information communication device after completing authentication of the information communication device. The device certificate includes information indicating that the information communication device has been authenticated and encryption information for encrypting information that is transmitted from the information communication device to the management device, and when the information communication device is connected to the management device through the closed network in a secure connection state, the information communication device transmits first authentication information for verifying the information communication device to the management device, and the management device is configured to authenticate the information communication device in the secure connection state with information for authenticating the information communication device that is second authentication information stored in advance in a storage unit and the first authentication information obtained from the information communication device and transmit the device certificate to the information communication device in the secure connection state with the management device after completing authentication of the information communication device.

A user needs to take burdensome procedures to obtain a device certificate for each apparatus. With the above configuration, when the management device is connected to the information communication device, the management device performs authentication determination on the information communication device. This simplifies the authentication process of the apparatus and reduces the cost for authenticating the apparatus.

In the above apparatus management system, the information communication device is configured to communicate with the management device and transmit the apparatus information in information packets encrypted based on the device certificate to the management device through the open network. With this configuration, the transmitted apparatus information is secure.

In the above apparatus management system, when the information communication device is connected to the management device through the closed network, the information communication device transmits first authentication information for verifying the information communication device to the management device, and the management device is configured to authenticate the information communication device with information for authenticating the information communication device that is second authentication information stored in advance in a storage unit and the first authentication information obtained from the information communication device, and transmit the device certificate to the information communication device after completing authentication of the information communication device.

With this configuration, the management device authenticates the information communication device with the information for authenticating the information communication device, namely, the second authentication information, which is stored in advance in the storage unit, and the first authentication information, which is obtained from the information communication device This avoids the authentication of a fraudulent information communication device.

In the above apparatus management system, the information communication device stores unique identification information of the information communication device as the first authentication information, and the management device is configured to store identification information for authentication in association with the unique identification information as the second authentication information

With this configuration, authentication determination on the information communication device is performed with the unique identification information, thus simplifying authentication.

In the above apparatus management system, the information communication device is incorporated in the apparatus.

With this configuration, the entire structure including the apparatus and the information communication device can be compact.

In the above apparatus management system, the information communication device is incorporated in an air conditioner that serves as the apparatus.

With this configuration, the air conditioner including the information communication device can be compact.

In an authentication method for authenticating an information communication device in an apparatus management system, the apparatus management system includes a management device that remotely manages apparatus information related to an apparatus and the information communication device connected to the apparatus to obtain the apparatus information and transmit the apparatus information to the management device by communicating with the management device through a communication network. The management device is configured to be connected to the information communication device through a closed network that connects the management device and the information communication device in a secure state, and the closed network is isolated in terms of access from an open network in the communication network. The authentication method includes: when the management device is connected to the information communication device through the closed network, performing authentication determination on the information communication device, transmitting a device certificate to the information communication device after completing authentication of the information communication device, the device certificate including information indicating that the information communication device has been authenticated and encryption information for encrypting information that is transmitted from the information communication device to the management device, a first step for transmitting first authentication information for verifying the information communication device to the management device with the information communication device when the information communication device is connected to the management device through the closed network in a secure connection state; a second step for authenticating the information communication device with the management device in the secure connection state using information for authenticating the information communication device that is second authentication information stored in advance in a storage unit and the first authentication information obtained from the information communication device; and a third step for transmitting, the device certificate to the information communication device, in the secure connection state with the management device after completing authentication of the information communication device.

The user needs to take burdensome procedures to obtain the device certificate for each apparatus. With the above configuration, when the management device is connected to the information communication device, the management device performs authentication determination on the information communication device. This simplifies the authentication process of the apparatus and reduces the cost of the authentication process.

The above authentication method further includes: a first step for transmitting first authentication information for verifying the information communication device to the management device with the information communication device when the information communication device is connected to the management device through the closed network in a secure connection state; a second step for authenticating the information communication device with the management device 3 in the secure connection state using information for authenticating the information communication device that is second authentication information stored in advance in a storage unit and the first authentication information obtained from the information communication device; and a third step for transmitting, a device certificate to the information communication device, in the secure connection state with the management device after completing authentication of the information communication device, the device certification including information indicating that the information communication device has been authenticated and encryption information for encrypting information that is transmitted from the information communication device to the management device.

This configuration avoids the authentication of a fraudulent information communication device.

### BRIEF DESCRIPTION OF THE DRAWINGS

Fig. 1 is a schematic diagram of an apparatus management system.
Fig. 2 is a block diagram of an information communication device.
Fig. 3 is a table stored in a management device.
Fig. 4 is a sequence diagram showing communication between the management device and the information communication device.
Fig. 5 is a flowchart of an initializing process.

### MODES FOR CARRYING OUT THE INVENTION

An apparatus management system 1 according to the present embodiment will now be described.

The apparatus management system 1 manages apparatus information 10 for apparatuses 2 that are connected to a communication network NA. The communication network NA includes an open network NB and a closed network NC. There is no restriction for connection to the open network NB. The Internet is an example of the open network NB. The closed network NC is isolated in terms of access from the open network NB in the communication network NA.

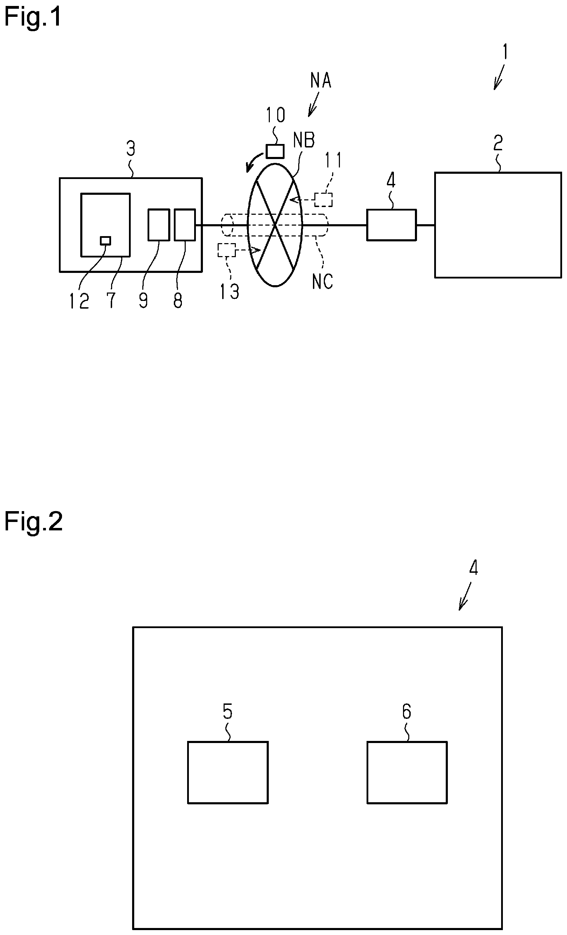

The closed network NC includes a dedicated communication network managed by a specific business entity and a virtual private network (hereafter referred to as VPN). The VPN includes an Internet VPN that operates on the Internet and an IP-VPN that uses an IP line provided by a specific business entity. In the present embodiment, the Internet VPN is schematically shown as a tunnel (broken line in Fig. 1).

Examples of the apparatuses 2 include an air conditioner, a refrigerator, an air cleaner, and the like. The apparatus information 10 includes at least a unique identification number of each apparatus 2 and apparatus operation information based on the operation of each apparatus 2. The apparatus operation information includes at least one of running information, diagnostic information, environmental information, and failure information of the corresponding apparatus 2. The running information includes at least one of accumulated power source driving time, activation frequency, and operating temperature of the apparatus 2. The environmental information refers to information about the ambient environment of the corresponding apparatus 2 and includes at least one of temperature, humidity, and the atmospheric pressure. The environmental information may be obtained by a sensor arranged on the apparatus 2. The apparatus 2 includes a camera for self-diagnosis. The diagnostic information of the apparatus 2 includes captured images (including video) of the camera.

The apparatus management system 1 will now be described with reference to Fig. 1. The apparatus management system 1 includes a management device 3 and an information communication device 4.

The management device 3 remotely manages the apparatus information 10 related to each apparatus 2. The management device 3 manages the apparatus information 10 for each apparatus 2 through the information communication device 4 (described later) connected to the apparatus 2. Preferably, the management device 3 manages the apparatus information 10 for each apparatus 2.

One or more terminals for accessing the apparatus information 10 are connected to the management device 3. The terminals include a personal computer, a laptop computer, a mobile phone, and a smartphone.

A first example of the apparatus information 10 managed by the management device 3 will now be described. The apparatus 2 is an air conditioner including a compressor. The apparatus 2 records the running information about the compressor whenever operated or in predetermined intervals. The running information is one type of the apparatus information 10. Examples of the running information include at least one of the activation frequency of the compressor, the accumulated driving time of the compressor, and the maximum voltage value. The running information is transferred to the management device 3 through the information communication device 4. The management device 3 stores the running information for each apparatus 2 together with date and time the running information was transferred. Further, the management device 3 may determine that an apparatus 2 has an anomaly from the managed running information of the apparatus 2. The management device 3 may notify a terminal of an apparatus anomaly when an anomaly of the apparatus 2 is determined. Further, the management device 3 may estimate the life expectancy of an apparatus 2 from the managed running information of the apparatus 2.

A second example of the apparatus information 10 managed by the management device 3 will now be described. The apparatus 2 is an air conditioner including a camera for capturing images of a drain pan. The drain pan collects water that condenses on a heat exchanger. The apparatus 2 captures an image of the drain pan and records the captured image whenever operated or in predetermined intervals. The captured image is one type of the apparatus information 10. The captured image is transferred to the management device 3 through the information communication device 4. The management device 3 stores the captured images of each apparatus 2 together with the date and time the captured images were transferred. Further, the management device 3 may determine that an apparatus 2 has an anomaly from the managed captured image of the apparatus 2. The management device 3 may notify a terminal of an apparatus anomaly when an anomaly of the apparatus 2 is determined.

Information communication device

The information communication device 4 will now be described with reference to Fig. 2.

The information communication device 4 is connected to the apparatus 2. The information communication device 4 obtains the apparatus information 10 from the apparatus 2. The information communication device 4 transmits the apparatus information 10, which is obtained from the apparatus 2, to the management device 3.

The information communication device 4 may be incorporated in the apparatus 2. For example, the information communication device 4 is incorporated in an air conditioner serving as the apparatus 2. The information communication device 4 may be accommodated in a case that covers the apparatus 2. The information communication device 4 may be located outside the case of the apparatus 2. The information communication device 4 may be connected to the apparatus 2 by a cable or through wireless communication.

The information communication device 4 is connected to the communication network NA. The information communication device 4 is connected to the management device 3 through the closed network NC when initialized. The initialization sets the connection of the apparatus 2 and the management device 3. The initialization is performed when the apparatus 2 is installed at a location where the apparatus 2 is used.

When the information communication device 4 is connected to the management device 3 through the closed network NC, the information communication device 4 transmits first authentication information 11 for verifying the information communication device 4 to the management device 3.

The information communication device 4 stores unique identification information of the information communication device 4 as the first authentication information 11. The identification information of the information communication device 4 may include identification information of the apparatus 2 connected to the information communication device 4. After transmitting the first authentication information 11, the information communication device 4 is authenticated by the management device 3 as will be described later and receives a device certificate 13 from the management device 3. After the information communication device 4 obtains the device certificate 13 from the management device 3, the information communication device 4 cuts off the connection with the closed network NC.

After the information communication device 4 obtains the device certificate 13, the information communication device 4 communicates with the management device 3 through the open network NB. The information communication device 4 uses the device certificate 13 to transmit the apparatus information 10 of the apparatus 2 to the management device 3 through the open network NB. Specifically, the information communication device 4 transmits the apparatus information 10 in information packets encrypted based on the device certificate 13 to the management device 3. Thus, the information communication device 4 transmits the apparatus information 10 through the open network NB in a state in which a high level of security is ensured.

An example of a specific configuration of the information communication device 4 will now be described.

As shown in Fig. 2, the information communication device 4 includes a communication unit 5 and a storage unit 6. The communication unit 5 is configured to perform first communication through the open network NB and second communication through the closed network NC and switch between the first communication and the second communication. The first communication is, for example, TCP/IP communication. The second communication is, for example, communication by VPN connection based on the Security Architecture for Internet Protocol (IPsec).

The information communication device 4 includes a router that is connectable under TCP/IP and IPsec. The storage unit 6 of the information communication device 4 stores IP addresses for TCP/IP communication. The storage unit 6 of the information communication device 4 also stores information used for IPsec, namely, common key information, identification information of the management device 3, an authentication method, an encryption method, and network information/netmask information of the route to the management device 3. The information communication device 4 communicates with the management device 3 through the second communication during initialization. When the information communication device 4 obtains the device certificate 13, the information communication device 4 switches the connection between the information communication device 4 and the management device 3 from the second communication to the first communication.

### Management device

The management device 3 remotely manages the apparatus information 10 related to the apparatuses 2 as described above. Further, when connected to the information communication device 4 through the closed network NC, the management device 3 performs authentication determination on the information communication device 4. The authentication determination determines whether the information communication device 4 is authentic.

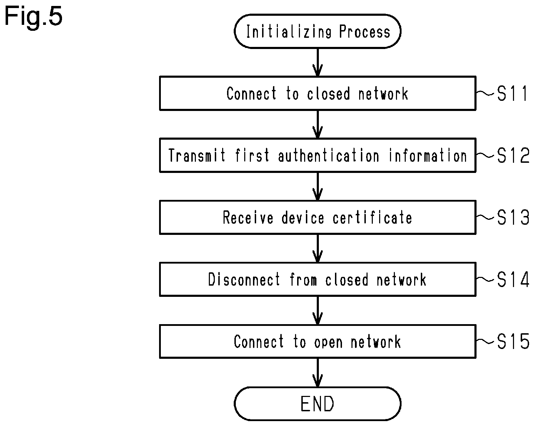

The management device 3 includes a storage unit 7 storing information, an information communication unit 8, and a control unit 9. The control unit 9 performs at least an authentication determination process (refer to step S13 in Fig. 5) for determining whether the information communication device 4 is authentic.

The control unit 9 may be circuitry including: 1) one or more processors that execute various processes according to a computer program (software); 2) one or more dedicated hardware circuits (application-specific integrated circuits: ASIC) that execute at least part of various processes, or 3) a combination thereof. The processor includes a CPU and memory such as RAM and ROM. The memory stores program code or commands configured to cause the CPU to execute processes. The memory, or computer-readable media, include any type of media that is accessible by general-purpose computers or dedicated computers.

In one example, the information communication unit 8 includes a router that is connectable under TCP/IP and IPsec. The information communication unit 8 stores IP addresses for TCP/IP communication. The information communication unit 8 also stores information used for IPsec, namely, common key information, identification information of the management device 3, an authentication method, an encryption method, and network information/netmask information of the route to the information communication device 4 that is the subject of communication. The information communication unit 8 is configured to perform the first communication through the open network NB and the second communication through the closed network NC and switch between the first communication and the second communication. The information communication unit 8 communicates with an unauthenticated information communication device 4 through the second communication. When the information communication device 4 is authenticated, the information communication unit 8 switches the connection with the information communication device 4 from the second communication to the first communication. The common key information is identical to the common key information stored in the information communication device 4. The authentication method and the encryption method are the same as the authentication method and the encryption method stored in the information communication device 4.

The storage unit 7 of the management device 3 stores the apparatus information 10. The apparatus information 10 stored in the management device 3 is transmitted from the information communication devices 4 connected to the management device 3. The management device 3 manages the apparatus information 10 for each apparatus 2.

The management device 3 uses second authentication information 12 to authenticate each information communication device 4. The second authentication information 12 is stored in advance in the storage unit 7. The second authentication information 12 is input in advance to the management device 3 through a terminal connected to the management device 3. The management device 3 stores the second authentication information 12 for the information communication devices 4 connected to the management device 3.

The second authentication information 12 is associated with unique identification information of the information communication device 4. The second authentication information 12 has a predetermined relationship with the first authentication information 11.

The second authentication information 12 may be identical to the first authentication information 11. The second authentication information 12 may include the first authentication information 11. The second authentication information 12 may have a predetermined arithmetic relationship with the first authentication information 11. For example, the sum of the second authentication information 12 and the first authentication information 11 may be a predetermined integer value.

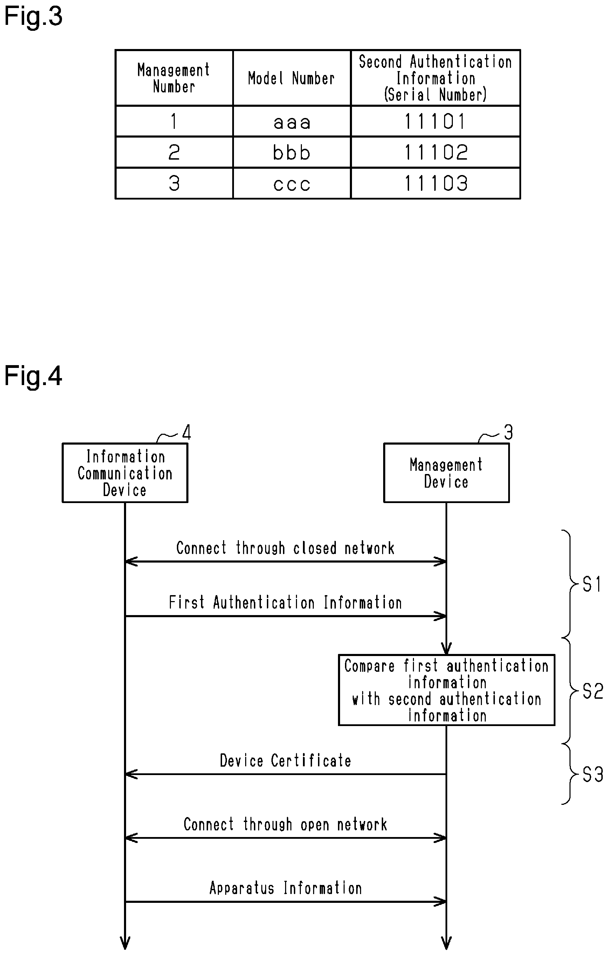

Fig. 3 is an example of a table stored in the management device 3. In the table, a management number is associated with each piece of second authentication information 12. In the example, the second authentication information 12 is the serial number or the MAC address of the information communication device 4. In the example, the second authentication information 12 is further related to the model number of the apparatus 2 connected to the information communication device 4.

The second authentication information 12 may be a single number as shown in Fig. 3 or sets of numbers. For example, the second authentication information 12 may be a set of three numbers such as "11," "12," and "13".

The control unit 9 of the management device 3 performs authentication determination on each information communication device 4 in accordance with the second authentication information 12 and the first authentication information 11 obtained from the information communication device 4. When the first authentication information 11 and the second authentication information 12 have a predetermined relationship, the control unit 9 authenticates the information communication device 4. When the first authentication information 11 and the second authentication information 12 do not have the predetermined relationship, the control unit 9 does not authenticate the information communication device 4.

Before the authentication determination is performed on the information communication device 4, the second authentication information 12 for the information communication device 4 that is authenticated is selected and used as a reference for the authentication determination. The second authentication information 12 is selected by a user of the terminal connected to the management device 3.

Specific examples of the authentication determination performed by the management device 3 will now be described.

When the second authentication information 12 is identical to the first authentication information 11, the control unit 9 gives a determination as follows. When determining that the first authentication information 11 obtained from the information communication device 4 is identical to the second authentication information 12, the control unit 9 authenticates the information communication device 4 that transmitted the first authentication information 11.

When the second authentication information 12 includes the first authentication information 11, the control unit 9 gives a determination as follows. When determining that the second authentication information 12 includes the first authentication information 11 obtained from the information communication device 4, the control unit 9 authenticates the information communication device 4 that transmitted the first authentication information 11.

When the sum of the second authentication information 12 and the first authentication information 11 is a predetermined integer value, the control unit 9 gives a determination as follows. When determining that the sum of the first authentication information 11 obtained from the information communication device 4 and the second authentication information 12 is a predetermined integer value, the control unit 9 authenticates the information communication device 4 that transmitted the first authentication information 11.

The management device 3 transmits the device certificate 13 to the information communication device 4 after completing the authentication of the information communication device 4. The device certificate 13 includes information indicating that the information communication device 4 has been authenticated and encryption information for encrypting information transmitted from the information communication device 4 to the management device 3.

The control unit 9 of the management device 3 generates a private key and a public key corresponding to the authenticated information communication device 4 after completing the authentication of the information communication device 4. The private key is substantially the only key that can decrypt information encrypted with the public key. The private key is stored in the storage unit 7 in association with the authenticated information communication device 4. The public key is transmitted to the authenticated information communication device 4. The public key is included in the device certificate 13 transmitted to the information communication device 4.

When receiving encrypted apparatus information 10 from an information communication device 4 through the open network NB, the control unit 9 of the management device 3 identifies the information communication device 4 from information of the information communication device 4. The management device 3 selects the private key that is unique to the identified information communication device 4. The management device 3 uses the selected private key to decrypt the encrypted apparatus information 10 transmitted from the information communication device 4.

### Authentication method

An authentication method for authenticating the information communication device 4 will now be described with reference to Figs. 4 and 5.

When the management device 3 and the information communication device 4 are connected through the closed network NC, the management device 3 performs authentication determination on the information communication device 4.

The management device 3 transmits the device certificate 13 to the information communication device 4 after completing the authentication of the information communication device 4. The device certificate 13 includes information indicating that the information communication device 4 has been authenticated and encryption information for encrypting information transmitted from the information communication device 4 to the management device 3.

Specifically, as shown in Fig. 4, in first step S1, when the information communication device 4 is connected to the management device 3 through the closed network NC in a secure connection state, the information communication device 4 transmits the first authentication information 11 for verifying the information communication device 4 to the management device 3.

In second step S2, the management device 3 performs authentication determination on the information communication device 4 in the secure connection state with information for authenticating the information communication device 4, namely, the second authentication information 12, which is stored in advance in the storage unit 6, and the first authentication information 11, which is obtained from the information communication device 4.

In third step S3, the management device 3 transmits the device certificate 13 to the information communication device 4 in the secure connection state after completing the authentication of the information communication device 4. When the information communication device 4 receives the device certificate 13, the information communication device 4 connects to the open network NB.

After the information communication device 4 is authenticated, the information communication device 4 transmits the apparatus information 10 to the management device 3 through the open network NB. The information communication device 4 may transmit the apparatus information 10 in predetermined intervals.

Fig. 5 is a flowchart of an initializing process performed by the information communication device 4. The initializing process is performed during installation of the apparatus 2. A program for the initializing process may be stored in the information communication device 4 or a terminal that is connected to the information communication device 4 to control the information communication device 4.

In step S11, the information communication device 4 is connected to the management device 3 through the closed network NC. For example, a terminal connected to the information communication device 4 may instruct the information communication device 4 to be connected to the management device 3 through the closed network NC. Further, a terminal connected to the management device 3 instructs the management device 3 to select the second authentication information 12 for the information communication device 4.

In step S12, the terminal connected to the information communication device 4 instructs the information communication device 4 to transmit the first authentication information 11 to the management device 3. The information communication device 4 enters a standby state and waits for a reply from the management device 3. During the standby period, the management device 3 performs authentication determination on the information communication device 4 with the first authentication information 11, which is transmitted from the information communication device 4, and the second authentication information 12. When the first authentication information 11 and the second authentication information 12 have the predetermined relationship, the management device 3 authenticates the information communication device 4. When the first authentication information 11 and the second authentication information 12 do not have the predetermined relationship, the management device 3 does not authenticate the information communication device 4. When the information communication device 4 is authenticated, the management device 3 transmits the device certificate 13 to the information communication device 4.

In step S13, the information communication device 4 receives the device certificate 13.

In step S14, upon receipt of the device certificate 13, the information communication device 4 cuts off the connection with the management device 3 through the closed network NC.

In step S15, the information communication device 4 is connected to the open network NB when transmitting the apparatus information 10 for the apparatus 2. The information communication device 4 encrypts the apparatus information 10 with the public key and transmits the encrypted apparatus information 10 to the management device 3. The management device 3 decrypts the encrypted apparatus information 10 with the private key and stores the apparatus information 10.

The operation of the present embodiment will now be described.

A database including the apparatus information 10 from the apparatuses 2 will be useful for improving the apparatuses 2. However, the apparatuses 2 cannot be appropriately improved when the apparatus information 10, which is related to failures and anomalies, is falsified. Thus, it is preferable that the apparatus information 10 for the apparatuses 2 be transmitted to the management device 3 in a secure state. Preferably, the apparatuses 2 are each connected to the management device 3 by a dedicated line. However, when more apparatuses 2 are connected to the dedicated line, the fee for using the dedicated line will increase and raise the cost for using dedicated line.

A system that reduces costs may use a certification authority that authenticates the apparatuses 2. Each apparatus 2 that is authenticated uses the device certificate 13 issued upon authentication to communicate with the management device 3 on the open network NB. Such a system ensures security and reduces costs. However, the authentication of each apparatus 2 when manufactured in a factory is burdensome. Specifically, the user will have to take the necessary procedures to obtain the device certificate 13 for each apparatus 2. In this case, the user when the apparatuses 2 are manufactured is the manufacturer of the apparatuses 2.

In the present embodiment, when each apparatus 2 is installed and connected to the management device 3 through the communication network NA, the management device 3 performs authentication determination on the information communication device 4 when the apparatus 2 is connected to the closed network NC via the information communication device 4. When the information communication device 4 is authenticated, the device certificate 13 is transmitted to the information communication device 4 through the closed network NC. In such an authentication method, the apparatus 2 or the information communication device 4 does not need to be connected to the communication network NA when manufactured. This simplifies the manufacturing steps. When the apparatus 2 is installed and connected to the communication network NA via the information communication device 4, the information communication device 4 is authenticated. In this manner, the process for connecting the apparatus 2 to the communication network NA and the process for authenticating the information communication device 4 are performed through the same series of steps. This increases the efficiency of the authentication process.

The present embodiment has the following advantages.
(1) In the apparatus management system 1, when the management device 3 is connected to an information communication device 4 through the closed network NC, the management device 3 performs authentication determination on the information communication device 4. When completing the authentication of the information communication device 4, the management device 3 transmits the device certificate 13 to the information communication device 4.
   A user needs to take burdensome procedures to obtain the device certificate 13 for each apparatus 2. With the above configuration, when the management device 3 is connected to the information communication device 4, the management device 3 performs authentication determination on the information communication device 4. This simplifies the authentication process of the apparatus 2 and reduces the cost for authenticating the apparatus 2.
(2) In the apparatus management system 1, the information communication device 4 communicates with the management device 3 and transmits the apparatus information 10 in information packets encrypted based on the device certificate 13 to the management device 3 through the open network NB. With this configuration, the transmitted apparatus information 10 is more secure than when the transmitted apparatus information 10 is not encrypted.
(3) In the apparatus management system 1, when the information communication device 4 is connected to the management device 3 through the closed network NC, the information communication device 4 transmits the first authentication information 11 for verifying the information communication device 4 to the management device 3. The management device 3 authenticates the information communication device 4 with the information for authenticating the information communication device 4, namely, the second authentication information 12, which is stored in advance in the storage unit 6, and the first authentication information 11, which is obtained from the information communication device 4. The management device 3 transmits the device certificate 13 to the information communication device 4 after completing the authentication of the information communication device 4.
   With this configuration, the management device 3 authenticates the information communication device 4 with the information for authenticating the information communication device 4, namely, the second authentication information 12, which is stored in advance in the storage unit 6, and the first authentication information 11, which is obtained from the information communication device 4. This avoids the authentication of a fraudulent information communication device 4.
(4) In the apparatus management system 1, each information communication device 4 stores unique identification information of the information communication device 4 as the first authentication information 11, and the management device 3 stores identification information for authentication in association with the identification information as the second authentication information 12. With this configuration, authentication determination on the information communication device 4 is performed with the unique identification information, thus simplifying authentication.
(5) In the apparatus management system 1, the information communication device 4 is incorporated in the apparatus 2. With this configuration, the entire structure, including the apparatus 2 and the information communication device 4, can be compact.
(6) When the apparatus 2 is an air conditioner, the information communication device 4 may be incorporated in the air conditioner, which serves as the apparatus 2. With this configuration, the air conditioner including the information communication device 4 can be compact.
(7) In the authentication method for authenticating the information communication device 4, when the management device 3 is connected to the information communication device 4 through the closed network NC, the management device 3 performs authentication determination on the information communication device 4. Then, after completing the authentication of the information communication device 4, the management device 3 transmits the device certificate 13 to the information communication device 4. The device certificate 13 includes information indicating that the information communication device 4 has been authenticated and encryption information for encrypting information that is transmitted from the information communication device 4 to the management device 3.
   The user needs to take burdensome procedures to obtain the device certificate 13 for each apparatus 2. With the above configuration, when the management device 3 is connected to the information communication device 4, the management device 3 performs authentication determination on the information communication device 4. This simplifies the authentication process of the apparatus 2 and reduces the cost of the authentication process.
(8) In the authentication method, in the first step, when the information communication device 4 is connected to the management device 3 through the closed network NC in a secure connection state, the information communication device 4 transmits the first authentication information 11 for verifying the information communication device 4 to the management device 3. In the second step, the management device 3 authenticates the information communication device 4 in the secure connection state with the information for authenticating the information communication device 4, namely, the second authentication information 12, which is stored in advance in the storage unit 6, and the first authentication information 11, which is obtained from the information communication device 4. In the third step, after completing the authentication of the information communication device 4, the management device 3 transmits the device certificate 13 to the information communication device 4 in the secure connection state. The device certificate includes information indicating that the information communication device 4 has been authenticated and encryption information for encrypting information that is transmitted from the information communication device 4 to the management device 3.

With this configuration, the management device 3 authenticates the information communication device 4 with the second authentication information 12, which is stored in advance in the storage unit 6, and the first authentication information 11 obtained from the information communication device 4. This avoids the authentication of a fraudulent information communication device 4.

### Modifications

In addition to the above embodiment, the apparatus management system 1 of the present disclosure may be implemented by, for example, the modifications described below or by combining at least two modifications as long as the modifications are consistent with each other.

In the above embodiment, the information communication device 4 performs communication through VPN connection under IPsec as an example of the second communication through the closed network NC. However, the example of the second communication through the closed network NC is not limited. Other examples of the second communication performed through the closed network NC include IP-VPN, dedicated lines, and the like.

In the embodiment, after the authentication of the information communication device 4, the information communication device 4 transmits the apparatus information 10 to the management device 3 through the open network NB. In this case, the apparatus information 10 transmitted from the information communication device 4 may renew the device certificate 13.

Although the present device according to the embodiment has been described above, it will be understood that various changes in form and details can be made without departing from the scope of the present device in the claims.

## Claims

1. An apparatus management system (1), comprising:
a management device (3) configured to remotely manage apparatus information (10) related to an apparatus (2); and
an information communication device (4) connected to the apparatus (2) to obtain the apparatus information (10) and transmit the apparatus information (10) to the management device (3) by communicating with the management device (3) through a communication network (NA), wherein
the management device (3) is configured to be connected to the information communication device (4) through a closed network (NC) that connects the management device (3) and the information communication device (4) in a secure state, the closed network (NC) being isolated in terms of access from an open network (NB) in the communication network (NA),
when the management device (3) is connected to the information communication device (4) through the closed network (NC), the management device (3) is configured to perform authentication determination on the information communication device (4) and transmit a device certificate (13) to the information communication device (4) after completing authentication of the information communication device (4), the device certificate (13) including information indicating that the information communication device (4) has been authenticated and encryption information for encrypting information that is transmitted from the information communication device (4) to the management device (3), and
when the information communication device (4) is connected to the management device (3) through the closed network (NC) in a secure connectior state, the information communication device (4) transmits first authentication information (11) for verifying the information communication device (4) to the management device (3), and the management device (3) is configured to authenticate the information communication device (4) in the secure connection state
with information for authenticating the information communication device (4) that is second authentication information (12) stored in advance in a storage unit (7) and the first authentication information (11) obtained from the information communication device (4), and transmit the device certificate (13) to the information communication device (4) in the secure connection state with the management device (3) after completing authentication of the information communication device (4).

2. The apparatus management system according to claim 1, wherein the information communication device (4) is configured to communicate with the management device (3) and transmit the apparatus information (10) in information packets encrypted based on the device certificate (13) to the management device (3) through the open network (NB).

3. The apparatus management system according to claim 1, wherein
the information communication device (4) stores unique identification information of the information communication device (4) as the first authentication information (11), and
the management device (3) is configured to store identification information for authentication in association with the unique identification information as the second authentication information (12).

4. The apparatus management system according to any one of claims 1 to 3, wherein the information communication device (4) is incorporated in the apparatus (2).

5. The apparatus management system according to any one of claims 1 to 4, wherein the information communication device (4) is incorporated in an air conditioner that serves as the apparatus (2).

6. An authentication method for authenticating an information communication device (4) in an apparatus management system (1), the apparatus management system (1) including a management device (3) configured to remotely manage apparatus information (10) related to an apparatus (2) and the information communication device (4) connected to the apparatus (2) to obtain the apparatus information (10) and transmit the apparatus information (10) to the management device (3) by communicating with the management device (3) through a communication network (NA),
wherein the management device (3) is configured to be connected to the information communication device (4) through a closed network (NC) that connects the management device (3) and the information communication device (4) in a secure state, the closed network (NC) being isolated in terms of access from an open network (NB) in the communication network (NA),
the authentication method comprising:
when the management device (3) is connected to the information communication device (4) through the closed network (NC),
performing authentication determination on the information communication device (4),
transmitting a device certificate (13) to the information communication device (4) after completing authentication of the information communication device (4), the device certificate (13) including information indicating that the information communication device (4) has been authenticated and encryption information for encrypting information that is transmitted from the information communication device (4) to the management device (3),
a first step for transmitting first authentication information (11) for verifying the information communication device (4) to the management device (3) with the information communication device (4) when the information communication device (4) is connected to the management device (3) through the closed network (NC) in a secure connection state;
a second step for authenticating the information communication device (4) with the management device (3) in the secure connection state using information for authenticating the information communication device (4) that is second authentication information (12) stored in advance in a storage unit (7) and the first authentication information (11) obtained from the information communication device (4); and
a third step for transmitting, the device certificate (13) to the information communication device (4), in the secure connection state with the management device (3) after completing authentication of the information communication device (4).

## Patentansprüche

1. Vorrichtungsverwaltungssystem (1), umfassend:
eine Verwaltungsvorrichtung (3), die so konfiguriert ist, dass sie eine auf eine Vorrichtung (2) bezogene Vorrichtungsinformation (10) aus der Ferne verwaltet; und
eine Informationskommunikationsvorrichtung (4), die mit der Vorrichtung (2) verbunden ist, um die Vorrichtungsinformation (10) zu erhalten und die Vorrichtungsinformation (10) an die Verwaltungsvorrichtung (3) zu übertragen, indem sie mit der Verwaltungsvorrichtung (3) über ein Kommunikationsnetzwerk (NA) kommuniziert, wobei
die Verwaltungsvorrichtung (3) so konfiguriert ist, dass sie mit der Informationskommunikationsvorrichtung (4) über ein geschlossenes Netzwerk (NC) verbunden ist, das die Verwaltungsvorrichtung (3) und die Informationskommunikationsvorrichtung (4) in einem sicheren Zustand verbindet, wobei das geschlossene Netzwerk (NC) hinsichtlich des Zugangs von einem offenen Netzwerk (NB) in dem Kommunikationsnetzwerk (NA) isoliert ist,
wenn die Verwaltungsvorrichtung (3) mit der Informationskommunikationsvorrichtung (4) über das geschlossene Netzwerk (NC) verbunden ist, die Verwaltungsvorrichtung (3) so konfiguriert ist, dass sie eine Authentifizierungsbestimmung an der Informationskommunikationsvorrichtung (4) durchführt und nach Abschluss der Authentifizierung der Informationskommunikationsvorrichtung (4) ein Vorrichtungszertifikat (13) an die Informationskommunikationsvorrichtung (4) überträgt, wobei das Vorrichtungszertifikat (13) eine Information einschließt, die anzeigt, dass die Informationskommunikationsvorrichtung (4) authentifiziert worden ist, sowie eine Verschlüsselungsinformation zum Verschlüsseln einer Information, die von der Informationskommunikationsvorrichtung (4) an die Verwaltungsvorrichtung (3) übertragen wird, und
wenn die Informationskommunikationsvorrichtung (4) mit der Verwaltungsvorrichtung (3) über das geschlossene Netzwerk (NC) in einem sicheren Verbindungszustand verbunden ist, die Informationskommunikationsvorrichtung (4) eine erste Authentifizierungsinformation (11) zur Verifizierung der Informationskommunikationsvorrichtung (4) an die Verwaltungsvorrichtung (3) überträgt, und die Verwaltungsvorrichtung (3) so konfiguriert ist, dass sie die Informationskommunikationsvorrichtung (4) in dem sicheren Verbindungszustand mit einer Information zur Authentifizierung der Informationskommunikationsvorrichtung (4) authentifiziert, bei der es sich um eine im Voraus in einer Speichereinheit (7) gespeicherten zweiten Authentifizierungsinformation (12) und die von der Informationskommunikationsvorrichtung (4) erhaltenen ersten Authentifizierungsinformation (11) handelt, und sie das Vorrichtungszertifikat (13) an die Informationskommunikationsvorrichtung (4) in dem sicheren Verbindungszustand mit der Verwaltungsvorrichtung (3) überträgt
nach Abschluss der Authentifizierung der Informationskommunikationsvorrichtung (4).

2. Vorrichtungsverwaltungssystem nach Anspruch 1, wobei die Informationskommunikationsvorrichtung (4) so konfiguriert ist, dass sie mit der Verwaltungsvorrichtung (3) kommuniziert und die Vorrichtungsinformation (10) in Informationspaketen, die auf der Grundlage des Vorrichtungszertifikats (13) verschlüsselt sind, über das offene Netzwerk (NB) an die Verwaltungsvorrichtung (3) überträgt.

3. Vorrichtungsverwaltungssystem nach Anspruch 1, wobei
die Informationskommunikationsvorrichtung (4) eine eindeutige Identifikationsinformation der Informationskommunikationsvorrichtung (4) als die erste Authentifizierungsinformation (11) speichert, und
die Verwaltungsvorrichtung (3) so konfiguriert ist, dass sie eine Identifizierungsinformation zur Authentifizierung in Verbindung mit der eindeutigen Identifizierungsinformation als die zweite Authentifizierungsinformation (12) speichert.

4. Vorrichtungsverwaltungssystem nach einem der Ansprüche 1 bis 3, wobei die Informationskommunikationsvorrichtung (4) in die Vorrichtung (2) eingebaut ist.

5. Vorrichtungsverwaltungssystem nach einem der Ansprüche 1 bis 4, wobei die Informationskommunikationsvorrichtung (4) in eine Klimaanlage eingebaut ist, die als Vorrichtung (2) dient.

6. Authentifizierungsverfahren zum Authentifizieren einer Informationskommunikationsvorrichtung (4) in einem Vorrichtungsverwaltungssystem (1), wobei das Vorrichtungsverwaltungssystem (1) einschließt eine Verwaltungsvorrichtung (3), die so konfiguriert ist, dass sie eine Vorrichtungsinformation (10), die sich auf eine Vorrichtung (2) bezieht, aus der Ferne verwaltet, und wobei die Informationskommunikationsvorrichtung (4) mit der Vorrichtung (2) verbunden ist, um die Vorrichtungsinformation (10) zu erhalten und die Vorrichtungsinformation (10) an die Verwaltungsvorrichtung (3) zu übertragen, indem sie mit der Verwaltungsvorrichtung (3) über ein Kommunikationsnetzwerk (NA) kommuniziert,
wobei die Verwaltungsvorrichtung (3) so konfiguriert ist, dass sie mit der Informationskommunikationsvorrichtung (4) über ein geschlossenes Netzwerk (NC) verbunden ist das die Verwaltungsvorrichtung (3) und die Informationskommunikationsvorrichtung (4) in einem sicheren Zustand verbindet, wobei das geschlossene Netzwerk (NC) hinsichtlich des Zugangs von einem offenen Netzwerk (NB) in dem Kommunikationsnetzwerk (NA) isoliert ist,
wobei das Authentifizierungsverfahren umfasst:
wenn die Verwaltungsvorrichtung (3) mit der Informationskommunikationsvorrichtung (4) über das geschlossene Netzwerk (NC) verbunden ist,
Durchführen einer Authentifizierungsbestimmung an der Informationskommunikationsvorrichtung (4),
Übertragen eines Vorrichtungszertifikats (13) an die Informationskommunikationsvorrichtung (4) nach Abschluss der Authentifizierung der Informationskommunikationsvorrichtung (4), wobei das Vorrichtungszertifikat (13) eine Information einschließt, die anzeigt, dass die Informationskommunikationsvorrichtung (4) authentifiziert worden ist, sowie eine Verschlüsselungsinformation zum Verschlüsseln einer Information, die von der Informationskommunikationsvorrichtung (4) an die Verwaltungsvorrichtung (3) übertragen wird,
einen ersten Schritt zum Übertragen einer ersten Authentifizierungsinformation (11) zum Verifizieren der Informationskommunikationsvorrichtung (4) an die Verwaltungsvorrichtung (3) mit der Informationskommunikationsvorrichtung (4), wenn die Informationskommunikationsvorrichtung (4) mit der Verwaltungsvorrichtung (3) über das geschlossene Netzwerk (NC) in einem sicheren Verbindungszustand verbunden ist;
einen zweiten Schritt zum Authentifizieren der Informationskommunikationsvorrichtung (4) mit der Verwaltungsvorrichtung (3) in dem sicheren Verbindungszustand unter Verwendung einer Information zum Authentifizieren der Informationskommunikationsvorrichtung (4), bei der es sich um eine im Voraus in einer Speichereinheit (7) gespeicherten zweiten Authentifizierungsinformation (12) und die von der Informationskommunikationsvorrichtung (4) erhaltenen ersten Authentifizierungsinformation (11) handelt; und
einen dritten Schritt zum Übertragen des Vorrichtungszertifikats (13) an die Informationskommunikationsvorrichtung (4) in dem sicheren Verbindungszustand mit der Verwaltungsvorrichtung (3) nach Abschluss der Authentifizierung der Informationskommunikationsvorrichtung (4).

## Revendications

1. Système (1) de gestion d'appareil, comprenant :
un dispositif de gestion (3) configuré de manière à gérer à distance des informations (10) d'appareil relatives à un appareil (2) ; et
un dispositif (4) de communication d'informations connecté à l'appareil (2) pour obtenir les informations (10) d'appareil et transmettre les informations (10) d'appareil au dispositif de gestion (3) en communiquant avec le dispositif de gestion (3) par l'intermédiaire d'un réseau de communication (NA),
dans lequel
le dispositif de gestion (3) est configuré de manière à être connecté au dispositif (4) de communication d'informations par l'intermédiaire d'un réseau fermé (NC) qui connecte le dispositif de gestion (3) au dispositif (4) de communication d'informations dans un état sécurisé, le réseau fermé (NC) étant isolé en termes d'accès à partir d'un réseau ouvert (NB) dans le réseau de communication (NA),
lorsque le dispositif de gestion (3) est connecté au dispositif (4) de communication d'informations par l'intermédiaire du réseau fermé (NC), le dispositif de gestion (3) est configuré de manière à effectuer une détermination d'authentification sur le dispositif (4) de communication d'informations et à transmettre un certificat de dispositif (13) au dispositif (4) de communication d'informations après avoir terminé l'authentification du dispositif (4) de communication d'informations, le certificat de dispositif (13) incluant des informations qui indiquent que le dispositif (4) de communication d'informations a été authentifié ainsi que des informations de cryptage pour crypter les informations qui sont transmises à partir du dispositif (4) de communication d'informations au dispositif de gestion (3), et
lorsque le dispositif (4) de communication d'informations est connecté au dispositif de gestion (3) par l'intermédiaire du réseau fermé (NC) dans un état de connexion sécurisé, le dispositif (4) de communication d'informations transmet au dispositif de gestion (3) des premières informations d'authentification (11) pour vérifier le dispositif (4) de communication d'informations, et le dispositif de gestion (3) est configuré de manière à authentifier le dispositif (4) de communication d'informations dans l'état de connexion sécurisé avec des informations pour authentifier le dispositif (4) de communication d'informations qui sont des secondes informations d'authentification (12) stockées à l'avance dans une unité de stockage (7) et les premières informations d'authentification (11) obtenues auprès du dispositif (4) de communication d'informations, et à transmettre le certificat de dispositif (13) au dispositif (4) de communication d'informations dans l'état de connexion sécurisé avec le dispositif de gestion (3) après avoir terminé l'authentification du dispositif (4) de communication d'informations.

2. Système de gestion d'appareil selon la revendication 1, dans lequel le dispositif (4) de communication d'informations est configuré de manière à communiquer avec le dispositif de gestion (3) et à transmettre les informations (10) d'appareil sous la forme de paquets d'informations cryptés sur la base du certificat de dispositif (13) au dispositif de gestion (3) par l'intermédiaire du réseau ouvert (NB).

3. Système de gestion d'appareil selon la revendication 1, dans lequel
le dispositif (4) de communication d'informations stocke des informations d'identification uniques du dispositif (4) de communication d'informations en tant que les premières informations d'authentification (11), et
le dispositif de gestion (3) est configuré de manière à stocker des informations d'identification pour l'authentification en association avec les informations d'identification uniques en tant que les secondes informations d'authentification (12).

4. Système de gestion d'appareil selon l'une quelconque des revendications 1 à 3, dans lequel le dispositif (4) de communication d'informations est incorporé dans l'appareil (2).

5. Système de gestion d'appareil selon l'une quelconque des revendications 1 à 4, dans lequel le dispositif (4) de communication d'informations est incorporé dans un climatiseur qui sert d'appareil (2).

6. Procédé d'authentification pour authentifier un dispositif (4) de communication d'informations dans un système (1) de gestion d'appareil, le système (1) de gestion d'appareil incluant un dispositif de gestion (3) configuré de manière à gérer à distance des informations (10) d'appareil relatives à un appareil (2) et le dispositif (4) de communication d'informations connecté à l'appareil (2) afin d'obtenir les informations (10) d'appareil et à transmettre les informations (10) d'appareil au dispositif de gestion (3) en communiquant avec le dispositif de gestion (3) par l'intermédiaire d'un réseau de communication (NA),
dans lequel le dispositif de gestion (3) est configuré de manière à être connecté au dispositif (4) de communication d'informations par l'intermédiaire d'un réseau fermé (NC) qui connecte le dispositif de gestion (3) au dispositif (4) de communication d'informations dans un état sécurisé, le réseau fermé (NC) étant isolé en termes d'accès à partir d'un réseau ouvert (NB) dans le réseau de communication (NA),
le procédé d'authentification comprenant :
lorsque le dispositif de gestion (3) est connecté au dispositif (4) de communication d'informations par l'intermédiaire du réseau fermé (NC),
le fait d'effectuer une détermination d'authentification sur le dispositif (4) de communication d'informations,
le fait de transmettre un certificat de dispositif (13) au dispositif (4) de communication d'informations après avoir terminé l'authentification du dispositif (4) de communication d'informations, le certificat de dispositif (13) incluant des informations qui indiquent que le dispositif (4) de communication d'informations a été authentifié ainsi que des informations de cryptage pour crypter les informations transmises à partir du dispositif (4) de communication d'informations au dispositif de gestion (3),
une première étape pour transmettre des premières informations d'authentification (11) pour vérifier le dispositif (4) de communication d'informations au dispositif de gestion (3) à l'aide du dispositif (4) de communication d'informations lorsque le dispositif (4) de communication d'informations est connecté au dispositif de gestion (3) par l'intermédiaire du réseau fermé (NC) dans un état de connexion sécurisé ;
une deuxième étape pour authentifier le dispositif (4) de communication d'informations avec le dispositif de gestion (3) dans l'état de connexion sécurisé en utilisant des informations pour authentifier le dispositif (4) de communication d'informations qui sont des secondes informations d'authentification (12) stockées à l'avance dans une unité de stockage (7) et les premières informations d'authentification (11) obtenues depuis le dispositif (4) de communication d'informations ; et
une troisième étape pour transmettre le certificat de dispositif (13) au dispositif (4) de communication d'informations, dans l'état de connexion sécurisé avec le dispositif de gestion (3) après avoir terminé l'authentification du dispositif (4) de communication d'informations.
